# EUROPÄISCHE PATENTANMELDUNG

(11) **EP 4 458 225 A1**
(43) Veröffentlichungstag der Anmeldung: **06.11.2024**
(21) Anmeldenummer: 23171167.2
(22) Anmeldetag: 02.05.2023
(51) Int. Cl.: A47J 36/24, A47G 19/02, A47J 39/02

(54) **GESCHIRR-SYSTEM MIT EINER WÄRMEPLATTE**

(71) Anmelder: Jost, Vincent, 82031 Grünwald (DE)
(72) Erfinder: Jost, Vincent, 82031 Grünwald (DE)

(57) **Zusammenfassung**

Die Erfindung betrifft ein Geschirr-System mit einem Geschirrteil (9) und einer am Geschirrteil (9) befestigbaren Wärmeplatte (1), in der eine elektrische Heizvorrichtung (7) und eine wiederaufladbare Batterie (8) integriert sind, wobei das Geschirrteil (9) und die Wärmeplatte (1) korrespondierende Befestigungsmittel (13) umfassen, mittels derer die Wärmeplatte (1) abnehmbar an einem Boden des Geschirrteils (9) befestigt werden kann. Die Wärmeplatte (1) hat an einer Oberseite und einer Unterseite jeweils elektrische Kontakte (3, 4) zum Aufladen der Batterie (8).

## Beschreibung

Die Erfindung betrifft ein Geschirr-System gemäß dem Oberbegriff des Anspruchs 1 sowie eine Wärmeplatte für ein solches Geschirr-System.

Geschirr-Systeme, auf die im Folgenden Bezug genommen wird, dienen zum Warmhalten von Speisen und umfassen ein Geschirrteil und eine Wärmeplatte, die im separierten Zustand erhitzt und dann am Boden des Geschirrteils befestigt wird, um das Geschirrteil länger warm zu halten. Die DE 20 2017 101 554 U1 beschreibt beispielsweise ein Speisegeschirrsystem mit einer Wärmespeicherkassette, die am Boden eines Geschirrteils magnetisch befestigt werden kann. Die Wärmespeicherkassette umfasst ein spezielles Wärmespeichermaterial, das thermisch aufgeheizt wird und dann die Wärme an das Geschirrteil abgibt. Betrieb und Herstellung eines solchen Systems sind jedoch relativ aufwändig und teuer.

Es ist daher die Aufgabe der vorliegenden Erfindung ein Geschirr-System zu entwickeln, das kostengünstig herstellbar ist und einfach betrieben werden kann.

Gelöst wird diese Aufgabe gemäß der Erfindung durch die im Patentanspruch 1 angegebenen Merkmale. Weitere Ausgestaltungen der Erfindung ergeben sich aus den Unteransprüchen.

### Darstellung der Erfindung

Gemäß der Erfindung wird ein Geschirr-System mit einem Geschirrteil und einer am Geschirrteil befestigbaren Wärmeplatte vorgeschlagen, in der eine elektrische Heizvorrichtung und eine wiederaufladbare Batterie integriert sind, wobei das Geschirrteil und die Wärmeplatte korrespondierende Befestigungsmittel umfassen, mittels derer die Wärmeplatte abnehmbar am Boden des Geschirrteils befestigt werden kann. Die Wärmeplatte hat an ihrer Ober- und Unterseite jeweils elektrische Kontakte zum Aufladen der Batterie. Dadurch ist es möglich, mehrere Wärmeplatten übereinander zu stapeln und die Wärmeplatten im gestapelten Zustand gleichzeitig zu laden.

In einer bevorzugten Ausführungsform des Geschirr-Systems wird die Wärmeplatte magnetisch am Geschirrteil befestigt. Die zugehörigen Befestigungsmittel umfassen vorzugsweise wenigstens einen Magneten. In einer speziellen Ausführungsform kann die Wärmeplatte beispielsweise einen oder mehrere Magnete aufweisen; am Boden des Geschirrteils ist vorzugsweise ein Gegenstück mit Magneten angebracht. Alternativ kann auch eine Metallplatte angebracht werden.

Eine bevorzugte Ausführungsform des Geschirr-Systems umfasst eine Wärmeplatte und ein Geschirrteil, wobei wenigstens eines der genannten Teile mehrere Magneten aufweist, die im Abstand zueinander angeordnet sind. Das andere Teil hat ein Gegenstück, das ebenfalls mehrere im Abstand zueinander angeordnete Magneten oder Metallflächen aufweist. Die einzelnen magnetischen Komponenten (Magnete oder Metallflächen) sind dabei so angeordnet, dass eine magnetische Verbindung zwischen der Wärmeplatte und dem Geschirrteil durch Drehen der Wärmeplatte deaktiviert werden und die Wärmeplatte somit leicht abgenommen werden kann.

Bei einem Geschirrteil im Sinne der vorliegenden Erfindung kann es sich beispielsweise um einen Teller, eine Schüssel, eine Platte, eine Tasse oder ein anderes Geschirrteil handeln.

Wenigstens einer der an der Ober- und Unterseite der Wärmeplatte vorgesehenen elektrischen Kontakte ist vorzugsweise ringförmig ausgebildet. Gemäß einer speziellen Ausführungsform der Erfindung ist auf beiden Seiten der Wärmeplatte jeweils ein ringförmiger Kontakt vorgesehen. Eine spezielle Bauform einer Wärmeplatte kann beispielsweise einen zentralen elektrischen Kontakt und einen zweiten elektrischen Kontakt umfassen, der den zentralen Kontakt ringförmig umgibt.

Die Wärmeplatte hat vorzugsweise eine thermisch isolierte Unterseite und eine thermisch leitfähige Oberseite. Die Unterseite ist vorzugsweise aus einem thermisch isolierenden Material, wie z. B. Kunststoff oder Holz hergestellt, die Oberseite umfasst vorzugsweise eine Oberfläche aus Metall oder aus einem anderen thermisch gut leitfähigen Material.

Gemäß einer bevorzugten Ausführungsform der Erfindung ist die Wärmeplatte stapelbar ausgeführt. Die elektrischen Kontakte sind in diesem Fall vorzugsweise so angeordnet, dass sämtliche übereinander gestapelten Wärmeplatten in elektrischer Verbindung stehen und über einen einzigen Ladeanschluss aufladbar sind.

Die erfindungsgemäßen Wärmeplatten können mit einem Ladeanschluss, insbesondere einer Ladebuchse, ausgestattet sein. Der Ladanschluss ist vorzugsweise an einer seitlichen Umfangsfläche angeordnet.

Die in der Wärmeplatte integrierte elektrische Heizvorrichtung umfasst vorzugsweise einen Heizdraht, der elektrisch erhitzt wird.

Die Wärmeplatte hat vorzugsweise eine runde Bauform.

Die vorliegende Erfindung betrifft ferner eine elektrisch betriebene Wärmeplatte, in der eine elektrische Heizvorrichtung und eine wiederaufladbare Batterie integriert sind und die Befestigungsmittel umfasst, mittels derer sie abnehmbar an einem Boden eines Geschirrteils befestigt werden kann. An einer Oberseite und einer Unterseite der Wärmeplatte sind elektrische Kontakte vorgesehen, über die die Batterie aufgeladen werden kann. Die Wärmeplatte kann wie vorstehend beschrieben ausgeführt sein.

Gemäß einer bevorzugten Ausführungsform der Erfindung umfasst die Wärmeplatte eine Sensorik, z. B. einen Stromsensor oder Magnetsensor, der automatisch erkennt, wenn eine Wärmeplatte vom Stapel genommen oder am Boden eines Geschirrteils 10 angebracht wird. Sobald dies erkannt wird, schaltet sich die Heizvorrichtung automatisch ein, wodurch sich die Platte erhitzt. Wahlweise könnte auch ein Ein/Aus-Schalter vorgesehen sein, um die Wärmeplatte 1 ein- und auszuschalten.

### Kurze Beschreibung der Zeichnungen

Die Erfindung wird nachstehend anhand der beigefügten Zeichnungen beispielhaft näher erläutert. Es zeigen:
- Fig. 1a: eine Aufsicht auf eine Wärmeplatte gemäß einer Ausführungsform der Erfindung;
- Fig. 1b: eine Seitenansicht der Wärmeplatte von Fig. 1a;
- Fig. 1c: eine Ansicht der Wärmeplatte von Fig. 1a von unten;
- Fig. 2a: eine perspektivische Ansicht eines Geschirrteils zur Anwendung in einem erfindungsgemäßen Geschirr-System;
- Fig. 2b: eine Ansicht des Geschirrteils von Fig. 2a von unten.

### Ausführungsformen der Erfindung

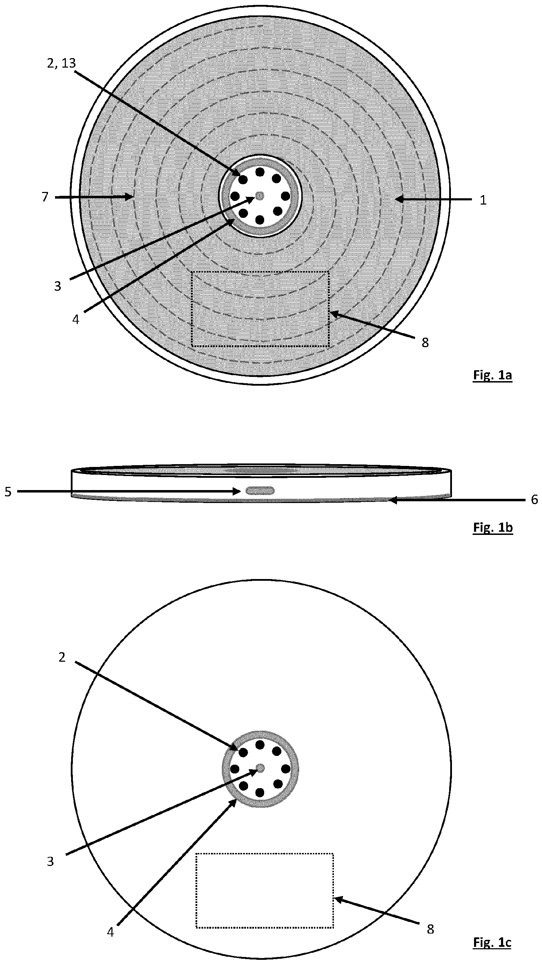

Fig. 1 zeigt eine elektrisch betriebene Wärmeplatte 1, in der eine elektrische Heizvorrichtung 7 und eine wiederaufladbare Batterie 8 integriert sind. Die Wärmeplatte 1 ist Teil eines Geschirr-Systems, das zum Warmhalten von Speisen dient. Die Heizvorrichtung 7 umfasst einen Heizdraht, der mittels der Batterie 8 elektrisch erhitzt wird.

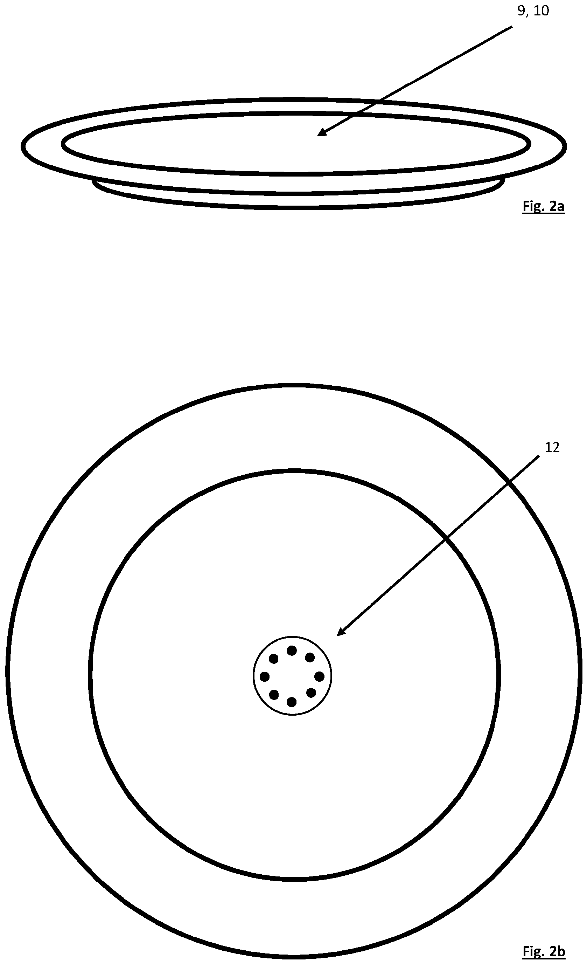

Die Wärmeplatte 1 hat an ihrer Oberseite Befestigungsmittel 13, mittels derer sie abnehmbar an einem Boden eines Geschirrteils 10 (Fig. 2a) befestigt werden kann. Im dargestellten Ausführungsbeispiel sind als Befestigungsmittel 13 mehrere Magnete 2 vorgesehen, die in einem zentralen Bereich der Wärmeplatte 1 ringförmig angeordnet sind. Das Geschirrteil 10 umfasst an seiner Unterseite eine magnetische Metallplatte oder ein magnetisches Gegenstück 12 (Fig. 2b), an der bzw, dem die Magnete 2 im zusammengesetzten Zustand anhaften.

Die in den Fig. 1a - 1c dargestellte Wärmeplatte 1 umfasst ferner mehrere elektrische Kontakte 3, 4, über die die Batterie 8 aufgeladen werden kann. Bei der hier dargestellten Ausführungsform sind an der Ober- und Unterseite der Wärmeplatte 1 jeweils zwei elektrische Kontakte 3, 4 vorgesehen. Ein erster Kontakt ist ein im Zentrum der Wärmeplatte 1 angeordneter punktförmiger Kontakt 3; ein zweiter Kontakt 4 ist ringförmig ausgebildet und umgibt den zentralen elektrischen Kontakt 3.

Die Wärmeplatten 1 sind so ausgeführt, dass sie übereinandergestapelt und im gestapelten Zustand an denselben elektrischen Kreis angebunden sind und alle gleichzeitig geladen werden können.

Die in den Figuren 1a-1c dargestellte Ausführungsform hat vorzugsweise eine thermisch isolierende Unterseite und eine thermisch leitfähige Oberseite. Die Unterseite ist vorzugsweise aus einem thermisch isolierenden Material, wie z. B. Kunststoff oder Holz hergestellt, die Oberseite umfasst vorzugsweise eine Oberfläche aus Metall oder einem anderen thermisch gut leitfähigen Material. Die Wärmeplatte 1 kann auch eine oder mehrere LEDs 6 aufweisen, die den Ladezustand oder einen Wärmezustand (Temperaturanzeige) anzeigen.

Gemäß einer bevorzugten Ausführungsform der Erfindung ist die Wärmeplatte 1 stapelbar ausgeführt. Die elektrischen Kontakte 3, 4 sind hier so angeordnet, dass sämtliche übereinander gestapelten Wärmeplatten 1 in elektrischer Verbindung stehen und über einen einzigen Ladeanschluss 5 aufladbar sind.

Die Figuren 2a, b zeigen ein beispielhaftes Geschirrteil 10 in Form eines Tellers 9. Wie in Fig. 2b zu sehen ist, ist der Boden des Tellers 9 mit einem Gegenstück 12 ausgestattet, an der die Magnete 2 der Wärmeplatte 1 im zusammengesetzten Zustand haften bleiben.

An der Unterseite des Tellers 9 befindet sich im dargestellten Beispiel ein kreisförmiges Gegenstück, welches die Wärmeplatte 1 mithilfe von Magneten 2 mit dem Geschirrteil 10 verbindet. Das Gegenstück kann alternativ auch eine Metallplatte sein, die z. B. am Boden des Teller 9 aufgeklebt sein kann.

Zum Aufladen der Batterie 8 werden vorzugsweise mehrere Wärmeplatten 1 übereinandergestapelt und an das elektrische Stromnetz angeschlossen. Eine elektrische Ladestation ist nicht unbedingt erforderlich, kann aber vorgesehen sein.

Eine in der Wärmeplatte 1 vorgesehene Sensorik (nicht gezeigt) erkennt automatisch, wenn eine Wärmeplatte 1 vom Stapel genommen oder am Boden eines Geschirrteils 10 angebracht wird. Sobald dies erkannt wird, schaltet sich die Heizvorrichtung 7 automatisch ein, wodurch sich die Platte 1 erhitzt. Wahlweise könnte auch ein Ein/Aus-Schalter vorgesehen sein, um die Wärmeplatte 1 ein- und auszuschalten.

## Patentansprüche

1. Geschirr-System mit einem Geschirrteil (9) und einer am Geschirrteil (9) befestigbaren Wärmeplatte (1), in der eine elektrische Heizvorrichtung (7) und eine wiederaufladbare Batterie (8) integriert sind, wobei das Geschirrteil (9) und die Wärmeplatte (1) korrespondierende Befestigungsmittel (13) umfassen, mittels derer die Wärmeplatte (1) abnehmbar an einem Boden des Geschirrteils (9) befestigt werden kann, **dadurch gekennzeichnet, dass**
an einer Oberseite und einer Unterseite der Wärmeplatte (1) jeweils elektrische Kontakte (3, 4) zum Aufladen der Batterie (8) vorgesehen sind.

2. Geschirr-System nach Anspruch 1, **dadurch gekennzeichnet, dass** die Befestigungsmittel (13) wenigstens einen Magneten (2) umfassen.

3. Geschirr-System nach Anspruch 1, **dadurch gekennzeichnet, dass** am Boden des Geschirrteils (9) ein magnetisches Gegenstück (12) angeordnet ist.

4. Geschirr-System nach Anspruch 1, **dadurch gekennzeichnet, dass** wenigstens einer der elektrischen Kontakte (3, 4) ringförmig ausgebildet ist.

5. Geschirr-System nach Anspruch 1, **dadurch gekennzeichnet, dass** die Wärmeplatte (1) eine thermisch isolierte Unterseite und eine thermisch leitfähige Oberseite aufweist.

6. Geschirr-System nach Anspruch 1, **dadurch gekennzeichnet, dass** die Wärmeplatte (1) stapelbar ausgeführt ist und die elektrischen Kontakte (3, 4) so angeordnet sind, dass sämtliche übereinander gestapelten Wärmeplatten (1) in elektrischer Verbindung stehen und über einen einzigen Ladeanschluss (5) aufladbar sind.

7. Geschirr-System nach Anspruch 1, **dadurch gekennzeichnet, dass** die Wärmeplatte (1) einen Ladeanschluss (5) aufweist.

8. Geschirr-System nach Anspruch 1, **dadurch gekennzeichnet, dass** die Wärmeplatte (1) rund ist.

9. Elektrisch betriebene Wärmeplatte (1), in der eine elektrische Heizvorrichtung (7) und eine wiederaufladbare Batterie (8) integriert sind und die Befestigungsmittel (13) umfasst, mittels derer sie abnehmbar an einem Boden des Geschirrteils (9) befestigt werden kann,
**dadurch gekennzeichnet, dass**
an einer Oberseite und einer Unterseite der Wärmeplatte (1) jeweils elektrische Kontakte (3, 4) zum Aufladen der Batterie (8) vorgesehen sind.
